# EUROPÄISCHE PATENTANMELDUNG

(11) **EP 2 522 302 A1**
(43) Veröffentlichungstag der Anmeldung: **14.11.2012**
(21) Anmeldenummer: 11165943.9
(22) Anmeldetag: 13.05.2011
(51) Int. Cl.: A61C 13/01

(54) **Verstärkungseinrichtung für eine Kieferprothese und Verfahren zum Herstellen derselben**

(71) Anmelder: Zahntechnik Tripp GmbH, 82024 Taufkirchen (DE)
(72) Erfinder: Tripp, Bernhard, 83346, Bergen (DE)
(74) Vertreter: Szynka, Dirk

(57) **Zusammenfassung**

Eine Verstärkungseinrichtung (10, 10') zum Verstärken einer Kieferprothese bzw. Kieferteilprothese zur Verwendung in der Mundhöhle (Ober- und/oder Unterkiefer) eines Patienten umfasst erfindungsgemäß eine Vielzahl von Lagen (40, 42) mit jeweils mindestens einem Gelege (30-1, 30-2, 30-3, 30-4) bzw. mindestens ein Gewebe (50-1, 50-2) von Kohlefaser-Filamenten (32). Dabei sind die Lagen (40, 42) von einem ausgehärteten Kunststoff durchdrungen, und mindestens ein Teilbereich der Vielzahl von Lagen (40, 42) ist so ausgebildet, dass er im Wesentlichen formschlüssig mit einem Positivabdruck (20, 20') von mindestens einem Teilbereich eines Ober- oder Unterkiefers des Patienten ist. In der Vielzahl der Lagen (40, 42) von Kohlefaser-Filamenten (32) kann eine quasi-isotrope Verteilung der Richtungen der Filamente (32) in den Lagen (40, 42) ausgebildet sein. Entweder kann die Vielzahl von Lagen (40) mindestens vier Filament-Gelege (30-1, 30-2, 30-3, 30-4) umfassen, die bezüglich der Richtungen der Filamente (32) in den Gelegen (30-1, 30-2, 30-3, 30-4) gemäß einer der folgenden Stapelfolgen übereinander gelegt sind: (0°, -45°, 45°, 90°) oder (0°, 90°, 45°, -45°) oder Permutationen davon. Alternativ kann die Vielzahl von Lagen (42) mindestens zwei übereinander gelegte Filament-Gewebe (50-1, 50-2) umfassen, wobei die Richtungen der Filamente im ersten Gewebe (50-1) 0° und 90° und im zweiten Gewebe (50-2) -45° und +45° betragen. In einer Kieferprothesenvorrichtung, die als zahnmedizinische Kieferprothese bzw. Kieferteilprothese zur Verwendung in der Mundhöhle vorgesehen ist, und die ein Prothesenbasisteil mit einer Unterseite und einer Oberseite umfasst, wobei zumindest ein Teilbereich der Unterseite im Wesentlichen formschlüssig mit zumindest einem Teilbereich eines Positivabdrucks (20) eines Unter- oder Oberkiefers des und/oder zumindest einem Teilbereich des Unter- oder Oberkiefers ist, ist eine erfindungsgemäße Verstärkungseinrichtung (10, 10') im Wesentlichen vollständig in das Prothesenbasisteil eingebettet.

## Beschreibung

Die vorliegende Erfindung betrifft eine Verstärkungseinrichtung für eine Kieferprothese, eine Kieferprothesenvorrichtung mit der Verstärkungseinrichtung sowie Verfahren zum Herstellen der vorgenannten Gegenstände.

Der Begriff "Kieferprothese" wird hierin als Sammelbegriff für eine zahnmedizinische Kieferprothese und eine zahnmedizinische Kieferteilprothese verwendet. In zahnmedizinischer Verwendung dient eine Kieferprothese als Träger für einen oder mehrere Ersatzzähne in einem Unter-oder Oberkiefers eines menschlichen Patienten. Die Seite einer Kieferprothese, in der der eine oder die mehreren Ersatzzähne eingesetzt sind, wird hierin als die Oberseite der Kieferprothese und die der Oberseite gegenüberliegende Seite der Kieferprothese wird als Unterseite der Kieferprothese bezeichnet, unabhängig davon, ob die Kieferprothese zum Anbringen am Unterkiefer oder am Oberkiefer eines Patienten vorgesehen ist. Die Unterseite ist bei bestimmungsgemäßer Verwendung der Kieferprothese in der Mundhöhle (Ober- und/oder Unterkiefer) des Patienten in formschlüssigem Kontakt mit einem Teil des Unter- oder Oberkiefers bzw. dem den Kiefer abdeckenden Zahnfleisch.

Derartige Kieferprothesen sind häufig aus einem rosa- bzw. hautfarben gefärbten Kunststoff gefertigt. Der Kunststoff muss eine Zulassung für eine medizinische Verwendung, in Deutschland eine Zulassung gemäß dem Medizinproduktgesetz (MPG), aufweisen. Kieferprothesen für relativ großflächige Teilbereiche eines Unter- oder Oberkiefers weisen in der Regel eine in dem Kunststoff eingebettete, aus einer Metalllegierung hergestellte Metallverstärkung auf, wobei die Legierung in der Regel Chrom (Cr), Kobalt (Co) und Molybdän (Mb) umfasst. Bekannt sind flächig-massive Metallverstärkungen, die durch Formgießen hergestellt werden, und gewebeartige Metallverstärkungen, die als in Form gebogene Drahtgewebe hergestellt werden.

Die derzeit bekannten Metallverstärkungen weisen als einen ersten Nachteil auf, dass selbst obwohl sie bei der Verwendung in einer herkömmlichen Kieferprothese im Prothesen-Kunststoff vollständig eingebettet sind, bei dem Patienten, der die Kieferprothese in seiner Mundhöhle trägt, subjektiv einen als unangenehm bzw. störend empfundenen metallischen Geschmack verursachen. Ein weiterer Nachteil von Metallverstärkungen ist, dass sie ein viel höheres spezifisches Gewicht als der Prothesen-Kunststoff aufweisen, weshalb eine Kieferprothese mit einer Metallverstärkung in der Mundhöhle häufig vom Träger bzw. Patienten als störend schwer empfunden wird. Ein noch weiterer Nachteil ist, dass die Metallverstärkung eine relativ hohe Wärmekapazität und Wärmeleitfähigkeit aufweist, weshalb eine Kieferprothese mit Metallverstärkung bei einem Träger häufig eine störende bis schmerzende Warm-Kalt-Empfindlichkeit verursacht. Ein noch weiterer Nachteil ist, dass sich bei einer Kieferprothese mit einer Metallverstärkung häufig nach einer gewissen Einsatzzeit in dem die Verstärkung umgebenden Prothesen-Kunststoff, vermutlich aufgrund der unterschiedlichen Elastizitätsmodule der Kunststoffs und der Verstärkung, Risse ausbilden, die sich in dem Prothesen-Kunststoff von der Oberfläche der Kieferprothesen bis zur Metallverstärkung in der Tiefe der Kieferprothese erstrecken und dadurch deren Einsatzzeit herabsetzen.

Es ist eine Aufgabe der Erfindung ist es, eine Verstärkung für Kieferprothesen bereit zu stellen, bei der die vorgenannten Nachteile vermieden oder zumindest deutlich gemildert werden. Insbesondere ist es eine Aufgabe, eine Verstärkung für eine Kieferprothese bereitzustellen, die eine signifikant verlängerte mittlere Einsatzzeit der Kieferprothese ohne Rissbildung im Prothesen-Kunststoff ermöglicht.

Gemäß einem ersten Aspekt der Erfindung wird die Aufgabe gelöst durch eine Verstärkungseinrichtung zum Verstärken einer Kieferprothese bzw. Kieferteilprothese zur Verwendung im Gaumenbereich eines Menschen gemäß dem Oberbegriff des Anspruchs 1.

Erfindungsgemäß umfasst die Verstärkungseinrichtung eine Vielzahl von Lagen mit jeweils mindestens einem Gelege von Kohlefaser-Filamenten bzw. mindestens einem Gewebe von Kohlefaser-Filamenten, wobei die Lagen von einem ausgehärteten Kunststoff durchdrungen sind und mindestens ein Teilbereich der Vielzahl von Lagen so ausgebildet ist, dass er im Wesentlichen formschlüssig mit einem Positivabdruck von mindestens einem Teilbereich einer Mundhöhle (Ober- und/oder Unterkiefers eines menschlichen Patienten ist. Der Unterschied zwischen dem Elastizitätsmodul von Kohlefaser-Filamenten und dem Prothesen-Kunststoff ist signifikant geringer oder ist im Wesentlichen vernachlässigbar im Vergleich zu dem Unterschied zwischen dem Elastizitätsmodul von Metallverstärkungen aus einer Cr-Co-Mb Legierung und dem Prothesen-Kunststoff. Infolgedessen treten beim Verbiegen der erfindungsgemäßen Kieferprothese, etwa beim Einsetzen in den bzw. Herausnehmen aus dem Kiefer des Patienten, signifikant geringere oder im Wesentlichen keine mechanischen Spannungsdifferenzen zwischen dem Prothesen-Kunststoff und den Kohlefaser-Filamenten auf. Daher wird die Rissbildung im Prothesen-Kunststoff signifikant verringert bzw. vermieden.

Wenn die Kohlefaser-Filamente in der Form von Gelegen zur Verfügung gestellt sind, kann in der Vielzahl der Lagen der Gelege der Kohlefaser-Filamente eine quasi-isotrope Verteilung der Richtungen der Filamente in den Lagen ausgebildet sein. Die Vielzahl von Lagen kann mindestens vier Filament-Gelege umfassen, die bezüglich der Richtungen der Filamente in den Gelegen gemäß einer der folgenden Stapelfolgen übereinander gelegt sind: (0°, -45°, 45°, 90°), (0°, 45°, -45°, 90°), (-45°, 0°, 90°, 45°), (45°, 0°, 90°, -45°), (0°, 45°, 90°, -45°) oder (0°, 90°, -45°, 45°). Dadurch wird eine quasi-isotrope Steifigkeit, insbesondere eine quasi-isotrope Biegesteifigkeit, in der Verstärkungseinrichtung erzielt.

Wenn die Kohlefaser-Filamente in der Form von Geweben zur Verfügung gestellt sind, kann die Vielzahl von Lagen mindestens zwei übereinander gelegte Filament-Gewebe umfassen. Dabei können in dem ersten Gewebe die Richtungen der Filamente 0° und 90° und in dem zweiten Gewebe die Richtungen der Filamente -45° und +45° betragen. Auch dadurch wird eine quasi-isotrope Steifigkeit, insbesondere eine quasi-isotrope Biegesteifigkeit, in der Verstärkungseinrichtung erzielt.

Vorzugsweise weist der Kunststoff eine Zulassung als zahnmedizinischer Prothesenkunststoff auf. Auch kann der Kunststoff ein ausgehärtetes Kunstharz, wie etwa Polymethylmethacrylat, umfassen. Bei dieser Materialauswahl wird zum einen vermieden, dass für die Verstärkungseinrichtung eine Zulassung als zahnmedizinisches Material eingeholt werden muss, weil in vielen Staaten Kohlefasern bereits als zahnmedizinisches Material, in Deutschland etwa im Sinne des Medizinproduktgesetzes (MPG), zugelassen sind. Wenn darüber hinaus der Kunststoff aus der gleichen Materialklasse wie der Prothesen-Kunstsoff gewählt wird, ist eine gute und im Wesentlichen spannungsfreie Verbindung der Verstärkungseinrichtung mit dem Prothesen-Kunststoff gewährleistet.

Gemäß einem zweiten Aspekt der Erfindung wird die Aufgabe gelöst durch eine Kieferprothesenvorrichtung, die als zahnmedizinische Kieferprothese bzw. Kieferteilprothese zur Verwendung in der Mundhöhle (Ober- und/oder Unterkiefer) eines menschlichen Patienten vorgesehen ist und die ein Prothesenbasisteil mit einer Unterseite und einer Oberseite umfasst, wobei zumindest ein Teilbereich der Unterseite im Wesentlichen formschlüssig mit zumindest einem Teilbereich eines Positivabdrucks eines Unter- oder Oberkiefers des Patienten und/oder zumindest einem Teilbereich eines Unter- oder Oberkiefers des Patienten ist.

Erfindungsgemäß umfasst die Kieferprothesenvorrichtung eine Verstärkungseinrichtung nach dem ersten Aspekt, die im Wesentlichen vollständig in das Prothesenbasisteil eingebettet ist. Mit der so gewählten Verstärkungseinrichtung werden die entsprechend gleichen Vorteile erzielt wie für die Verstärkungseinrichtung gemäß dem ersten Aspekt.

Das die Verstärkungseinrichtung umgebende Material des Prothesenbasisteil kann ein Kunststoff sein, der eine Zulassung als zahnmedizinischer Prothesenkunststoff aufweist. Der Kunststoff kann im Wesentlichen ein gefärbtes Kunstharz, etwa Polymethylmethacrylat, enthalten. Bei dieser Materialauswahl wird zum einen vermieden, dass für die Kieferprothesenvorrichtung eine Zulassung als zahnmedizinisches Material eingeholt werden muss. Wenn darüber hinaus der Kunststoff aus der gleichen Materialklasse wie der in der Verstärkungseinrichtung verwendete Kunstsoff gewählt wird, ist eine gute und im Wesentlichen spannungsfreie Verbindung der Verstärkungseinrichtung mit dem Prothesen-Kunststoff gewährleistet.

In der Oberseite des Prothesenbasisteils können eine oder mehrere Zahnersatzeinrichtungen verankert sein. Mindestens ein Teilbereich der Unterseite des Prothesenbasisteils kann formschlüssig mit mindestens einem Teilbereich eines Ober- oder Unterkiefers des Menschen sein. Dadurch ist die Kieferprothesenvorrichtung als Zahnersatz ausgebildet.

An der Unterseite des Prothesenbasisteils kann mindestens eine Verankerungseinrichtung vorgesehen sein, die zum Verankern mit einer in einem Unter- oder Oberkiefer des Menschen eingesetzten Implantateinrichtung ausgebildet ist. Die Verankerungsvorrichtung gewährleistet einen sicheren Halt der Kieferprothesenvorrichtung in der Mundhöhle seines Trägers.

Gemäß einem dritten Aspekt der Erfindung wird die Aufgabe gelöst durch ein Verfahren zum Herstellen einer Verstärkungseinrichtung zum Verstärken einer Kieferprothese bzw. Kieferteilprothese zur Verwendung in der Mundhöhle (Ober- und/oder Unterkiefer) eines menschlichen Patienten.

Erfindungsgemäß umfasst das Verfahren die folgenden Schritte:
a1) Ausbilden eines Stapels mit einer Vielzahl übereinander gelegter Lagen mit jeweils mindestens einem Gelege von Kohlefaser-Filamenten bzw. mindestens einem Gewebe von Kohlefaser-Filamenten,
b1) Tränken des im Schritt a1) ausgebildeten Stapels mit einem flüssigen, aushärtbaren Kunststoff,
c1) Formpressen von zumindest einem Teilbereich des im Schritt b1) erhaltenen, getränkten Stapels in bzw. gegen zumindest einen Teilbereich eines Positivabdrucks eines Unter- oder Oberkiefers eines menschlichen Patienten, und
d1) Aushärten des Kunststoffs unter Beibehaltung der durch das Formpressen aus Schritt c1) erhaltenen Form und Bereitstellen des mit dem ausgehärteten Kunststoff getränkten Stapels als die Verstärkungseinrichtung.
Die Ausführung dieses Verfahrens führt zu einer Verstärkungseinrichtung, die die gleichen Vorteile aufweist wie die Verstärkungseinrichtung gemäß dem ersten Aspekt.
Beim übereinander Legen der Lagen kann in der Vielzahl der Gelege bzw. Gewebe eine quasi-isotrope Verteilung der Richtungen der Filamente in den einzelnen Gelegen bzw. Geweben ausgebildet werden. Dadurch wird eine quasi-isotrope Steifigkeit, insbesondere eine quasi-isotrope Biegesteifigkeit, der Verstärkungseinrichtung erzielt.

Im Schritt c1) kann zumindest ein Teilbereich des im Schritt b1) erhaltenen, getränkten Stapels auf zumindest einen Teilbereich eines Positivabdrucks eines Unter- oder Oberkiefers eines Menschen aufgelegt und tiefgezogen werden. Das Tiefziehen des getränkten Stapels auf den Positivabdruck des Kiefers bringt den Vorteil, dass eine Gegenform zum Formpressen des getränkten Stapels zwischen der Gegenform und dem Positivabdruck nicht erforderlich ist und mithin eingespart werden kann.

Zum Tiefziehen kann der Positivabdruck mitsamt dem aufgelegten Stapel, getränkt mit dem noch nicht ausgehärteten Kunststoff in einen vakuumdicht verschließbaren Beutel eingelegt und im Inneren des Beutels ein Vakuum erzeugt werden. Dabei kann eine Einfüllöffnung des Beutels an eine Vakuumpumpe angeschlossen und mittels der Vakuumpumpe Luft aus dem Inneren des Beutels abgesaugt werden. Dieses Tiefziehverfahren ist besonders geeignet, weil keine zusätzliche Trennfolie zum leichten Ablösen des Stapels von dem Positivabdruck nach dem Tiefziehen benötigt wird, denn die Beutelwand wirkt bereits als Trennfolie. Auch ist es nicht erforderlich, Durchlöcher durch die Positivform hindurch zu bohren und durch diese Löcher hindurch Luft aus dem Zwischenraum zwischen dem aufgelegten Stapel und dem Positivabdruck abzusaugen.

Vor dem Ausführen des Schritts c1) kann eine Trennfolie auf den Positivabdruck so aufgelegt werden, dass die Trennfolie zumindest einen Teilbereich des Positivabdrucks überdeckt, auf den im Schritt c1) der getränkte Stapel aufgelegt werden soll. Das Auflegen einer Trennfolie ermöglicht, dass der ausgehärtete Stapel leicht von dem Positivabdruck abgelöst werden kann.

Der im Schritt d1) erhaltene, ausgehärtete Stapel kann von dem Positivabdruck abgelöst und als die Verstärkungseinrichtung bereitgestellt werden.

Alternativ zum Tiefziehen kann im Schritt c1) zumindest ein Teilbereich des im Schritt b1) erhaltenen, getränkten Stapels zwischen zumindest einen Teilbereich eines Positivabdrucks eines Unter- oder Oberkiefers des Patienten und einen entsprechenden Teilbereich einer Gegenform zu dem Positivabdruck eingelegt werden, und es kann über den Positivabdruck und/oder die Gegenform auf den eingelegten Stapel ein vorbestimmter Druck beaufschlagt werden. Durch Formpressen des getränkten Stapels zwischen dem Positivabdruck und der Gegenform wird eine hohe Formgenauigkeit für die Verstärkungseinrichtung erzielt.

Vor dem Ausführen des Schritts c1) kann eine erste Trennfolie auf den Positivabdruck und eine zweite Trennfolie auf die Gegenform zu dem Positivabdruck so aufgelegt werden, dass die erste bzw. zweite Trennfolie zumindest einen jeweiligen Teilbereich des Positivabdrucks bzw. der Gegenform überdeckt, welche Teilbereiche im Schritt c1) in Kontakt mit den getränkten Stapel kommen. Das Auflegen einer Trennfolie ermöglicht, dass der ausgehärtete Stapel leicht von dem Positivabdruck bzw. der Gegenform abgelöst werden kann.

Beim Ausführen des Schritts c1) kann der formzupressende, getränkte Stapel zusammen mit dem Positivabdruck und in den Ausführungsformen, bei denen eine Gegenform vorgesehen ist, auch zusammen mit der Gegenform in einem Flüssigkeitsbad angeordnet werden und auf das Flüssigkeitsbad ein vorbestimmter Druck beaufschlagt werden. Das Beauschlagen des Drucks in einem Flüssigkeitsbad führt zu einer hohen Formgenauigkeit für die Verstärkungseinrichtung.

Nach dem Ausführen des Schritts d1) kann eine Mikroverzahnung auf zumindest einem Teilbereich der Oberfläche des ausgehärteten Stapels ausgebildet werden. Die Mikroverzahnung ermöglicht eine gute Verbindung zwischen dem Material der Verstärkungseinrichtung und dem Material der um die Verstärkungseinrichtung herum aufzubauenden Kieferprothese.

Gemäß einem vierten Aspekt der Erfindung wird die Aufgabe gelöst durch ein Verfahren zum Herstellen einer Kieferprothesenvorrichtung, vorgesehen als Kieferprothese bzw. Kieferteilprothese zur Verwendung in der Mundhöhle eines menschlichen Patienten mit folgendem Schritt:
a2) Einfüllen von aushärtbarem Kunststoff in eine zum Herstellen der Kieferprothesenvorrichtung vorgefertigte Gießform bzw. Kieferteilprothese.

Erfindungsgemäß wird eine Verstärkungseinrichtung gemäß dem ersten Aspekt der Erfindung in die Gießform eingebracht und im Wesentlichen vollständig in den Kunststoff eingetaucht. Die Anwendung dieses Verfahrens einer führt zu einer Kieferprothese, die die entsprechend gleichen Vorteile aufweist wie die Kieferprothese gemäß dem zweiten Aspekt.

Nach dem Einbringen der Verstärkungseinrichtung kann durch Aushärten des Kunststoffs in der Gießform die Kieferprothesenvorrichtung ausgebildet und die ausgebildete Kieferprothesenvorrichtung aus der Gießform ausgelöst werden.

In einer ersten Variante kann im Schritt a2) ein thermisch aushärtbarer Kunststoff in die Gießform eingefüllt werden und beim Aushärten kann auf die Gießform mit dem eingefüllten Kunststoff und der in dem Kunststoff eingetauchten Verstärkungseinrichtung in einem Flüssigkeitsbad ein vorbestimmter Heißaushärtedruck und eine vorbestimmte Heißaushärtetemperatur zumindest während einer vorbestimmten Heißaushärtezeitdauer beaufschlagt werden. Dieses sogenannte Heißaushärteverfahren ermöglicht eine kürzere Aushärtezeit als ein Kaltaushärten und damit eine relative Zeitersparnis beim Herstellen der Kieferprothese.

In einer zweiten Variante kann im Schritt a2) ein selbstaushärtendes Kunststoffsystem in die Gießform eingefüllt werden und kann beim Aushärten auf die Gießform mit dem eingefüllten Kunststoffsystem und der in dem Kunststoffsystem eingetauchten Verstärkungseinrichtung, vorzugsweise in einem Flüssigkeitsbad, während einer bestimmten Selbstaushärtezeit ein vorbestimmter Selbstaushärtedruck beaufschlagt werden.

Weitere Details und Ausführungsformen werden im Folgenden mit Verweis auf beigefügten, beispielhaften Zeichnungen beschrieben, wobei gilt:

Fig. 1 zeigt schematisch eine perspektivische Ansicht eines Stapels mit mehreren (vier) Lagen von Gelegen mit Kohlefaser-Filamenten in einer Explosionsdarstellung, wobei die Lagen zur Verdeutlichung der Richtungen der Filamente in den einzelnen Lagen voneinander beabstandet gezeigt sind.

Fig. 2 zeigt schematisch eine Querschnittansicht des Stapels entlang der Linie II-II in Fig. 1 durch die Lagen von Gelegen mit Kohlefaser-Filamenten aus der Fig. 1, wobei die Gelege aufeinander aufliegend gezeigt sind.

Fig. 3 zeigt schematisch eine perspektivische Ansicht eines Stapels mit mehreren (zwei) Lagen von Geweben aus Kohlefaser-Filamenten in einer Explosionsdarstellung, wobei die Lagen zur Verdeutlichung der Richtungen der Filamente in den einzelnen Lagen voneinander beabstandet gezeigt sind.

Fig. 4 zeigt schematisch eine perspektivische Ansicht eines Positivabdrucks eines Oberkiefers (ohne Zähne) eines Menschen mit einem in dem angedeuteten Bereich aufgelegten Stapels mit vier Lagen von Gelegen mit Kohlefaser-Filamenten.

Fig. 5 zeigt schematisch eine Querschnittansicht entlang der Linie V-V in Fig. 4, wobei der Stapel mit den vier Gelege-Lagen in einem aus einer Kunststofffolie gebildeten Beutel eingelegt ist und zum Tiefziehen des Stapels auf den Positivabdruck die Beutelöffnung über einen Ansaugstutzen einer Vakuumpumpe gezogen und gasdicht gegen den Ansaugstutzen abgedichtet ist.

Fig. 6 zeigt schematisch einen Querschnitt ähnlich wie Fig. 5 entlang der Linie VI-VI in Fig. 4, wobei eine Gegenform zu dem Positivabdruck bereitgestellt ist, um den Stapel formzupressen.

Kieferprothesenvorrichtungen, die als zahnmedizinische Kieferprothesen bzw. Kieferteilprothesen zur Verwendung in der Mundhöhle (Ober- und/oder Unterkiefer) eines menschlichen Patienten vorgesehen sind, umfassen ein Prothesenbasisteil mit einer Unterseite und einer Oberseite, wobei zumindest ein Teilbereich der Unterseite formschlüssig mit zumindest einem Teilbereich eines Positivabdrucks eines Unter- oder Oberkiefers des Patienten und/oder zumindest einem Teilbereich eines Unter- oder Oberkiefers des Patienten ist. Auf bzw. in der Oberseite des Prothesenbasisteils sind eine oder mehrere Zahnersatzeinrichtungen verankert. Die Unterseite bzw. mindestens ein Teilbereich der Unterseite des Prothesenbasisteils ist formschlüssig mit mindestens einem Teilbereich eines Ober- oder Unterkiefers des Patienten. So kann die Kieferprothesenvorrichtung gegen einen Kiefers (Ober- oder Unterkiefer) in der Mundhöhle des Patienten angedrückt werden und dort anhaften aufgrund von Vakuum- und/oder Adhäsionskräften, die zwischen der Unterseite des Prothesenbasisteils und der Oberfläche des Kiefers bzw. des den Kiefer bedeckenden Zahnfleischs wirken.

Das Prothesenbasisteil ist in der Regel aus einem Kunststoff hergestellt, in den nach der Erfindung eine Verstärkungseinrichtung zum Verstärken der Kieferprothesenvorrichtung im Wesentlichen vollständig eingebettet ist.

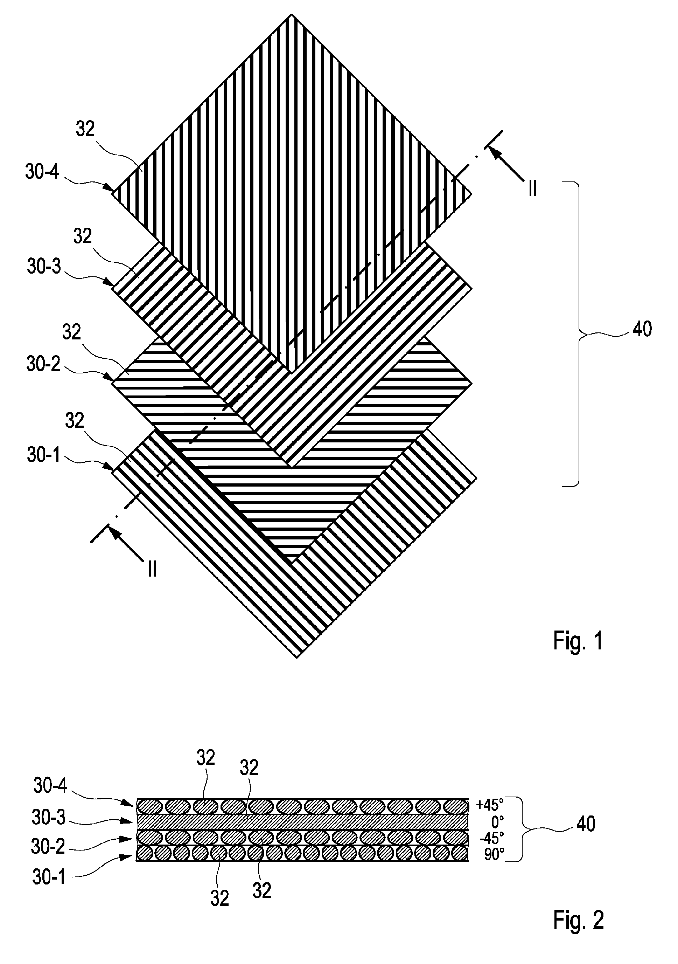

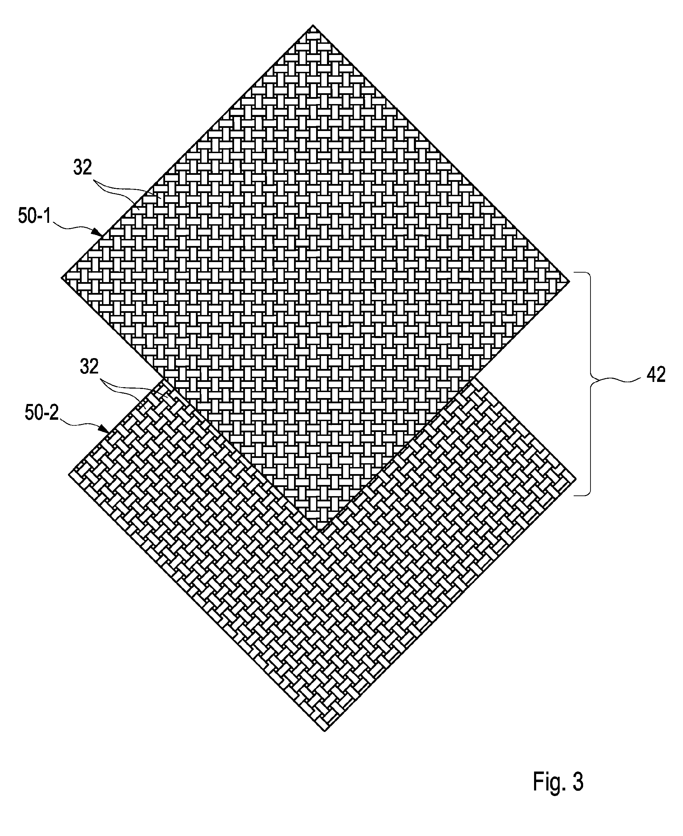

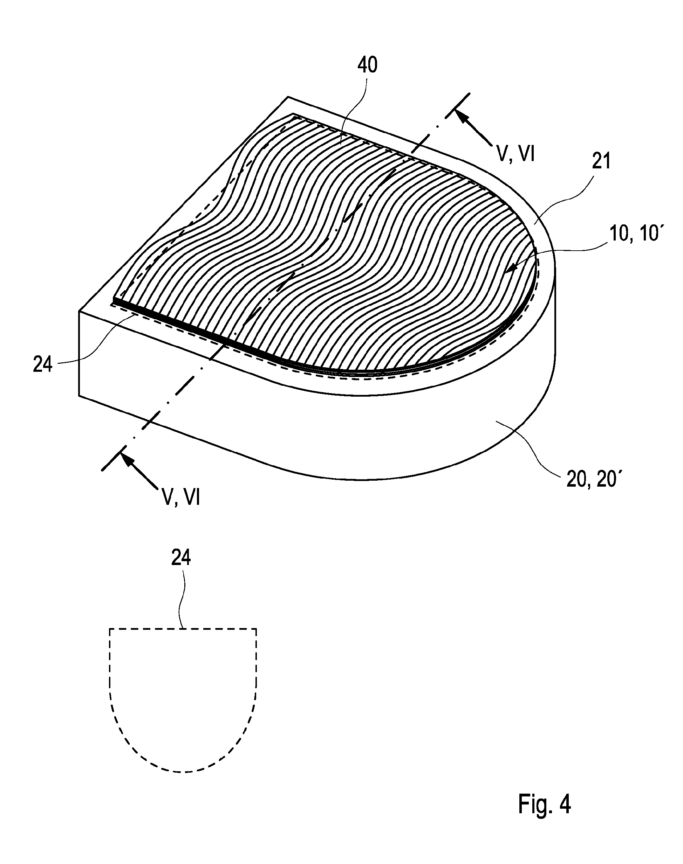

Das folgende geht mit Verweis auf die Figuren 1 bis 6. Die Verstärkungseinrichtung 10, 10' besteht aus einer Vielzahl von Lagen 40 aus Gelegen 30-1, 30-2, 30-3, 30-4 von Kohlefaser-Filamenten 32 (siehe Fig. 1 und 2) und/oder aus einer Vielzahl von Lagen 42 aus Geweben 50-1, 50-2 von Kohlefaser-Filamenten 32 (siehe Fig. 3). Dabei sind die Lagen 40, 42 von einem ausgehärteten Kunststoff durchdrungen bzw. durchtränkt. Ferner ist mindestens ein Teilbereich der Vielzahl der Lagen 40, 42 so ausgebildet, dass der Teilbereich im Wesentlichen formschlüssig mit einem Positivabdruck 20, 20' von mindestens einem Teilbereich eines Ober- oder Unterkiefers des Menschen ist (siehe Figuren 4 bis 6).

In der Vielzahl der Lagen 40, 42 der Kohlefaser-Filamente 32 ist eine quasi-isotrope Verteilung der Richtungen der Filamente 32 in den Gelegen 30-1, 30-2, 30-3, 30-4 bzw. in den Geweben 50-1, 50-2 ausgebildet.

In einer Ausführungsform umfasst die Vielzahl von Lagen 40 vier Filament-Gelege 30-1, 30-2, 30-3, 30-4, die bezüglich der Richtungen der Filamente 32 in den Gelegen gemäß einer der folgenden Stapelfolgen übereinandergelegt sind: (0°, 45°, 90°, -45°) wie in den Figuren 1 und 2 gezeigt, (0°, -45°, 45°, 90°), (0°, 45°, -45°, 90°), (-45°, 0°, 90°, 45°), (45°, 0°, 90°, -45°), oder (0°, 90°, -45°, 45°). Dabei gibt die Richtung der Filamente 32 in dem in Fig. 1 gezeigten untersten Gelege 30-1 die Richtung 0° an. Die übrigen Winkelangaben gelten für die Richtungen der Filamente 32 in der Ebene eines Geleges in Bezug auf die Richtung der Filamente in der Ebene des Geleges, für das die Richtung mit 0° angegeben ist. Je nach dem Flächengewicht der Kohlefaser-Filament-Gelege und dem gewünschten Gesamtflächengewicht könnten auch 8, 12 oder höhere Vielfache von 4 Filamentgelege vorgesehen sein, wobei sich für jeweils 4 Gelege eine der vorgenannten Stapelfolgen wiederholt.

In einer anderen Ausführungsform umfasst die Vielzahl von Lagen 42 zwei übereinandergelegte Filament-Gewebe 50-1, 50-2 (siehe Fig. 3). Dabei betragen in dem ersten Gewebe 50-1 die Richtungen der Filamente 0° und 90° und in dem zweiten Gewebe 50-2 die Richtungen -45° und +45°. Je nach dem Flächengewicht eines einzelnen Gewebes und dem gewünschten Gesamtflächengewicht der Vielzahl der Lagen können auch 4, 6, 8 oder höhere Vielfache von 2 Kohlefaser-Filament-Geweben übereinandergelegt sein.

Es werden handelsübliche Kohlenstofffasergelege, die etwa mit Flächengewichten von 100 g/m², 160 g/m², 200 g/m², 300 g/m² oder auch 1000 g/m² erhältlich sind oder handelsübliche Kohlefasergewebe, die mit Flächengewichten von 80 g/m², 150 g/m², 160 g/m², 200 g/m², 250 g/m², 400 g/m² oder 600 g/m², wie etwa bei Haufler Composites (www.haufler.eu) erhältlich sind, verwendet.

Eine einzelne Kohlenstoff-Faser hat einen Durchmesser von ca. 5 µm bis 8 µm. Üblicherweise werden 1.000 bis 24.000 Einzelfasern zu einem Bündel (Englisch: Roving, hier auch Filament genannt) zusammengefasst, das auf einer Spule gewickelt geliefert wird. Eine Weiterverarbeitung erfolgt dann auf Webmaschinen oder Wirkmaschinen zu textilen Strukturen, insbesondere Gelegen mit parallelen Filamenten (wie etwa die Gelege 30-1 bis 30-4 in Fig. 1) oder Geweben mit in einer Ebene der Struktur senkrecht zu einander orientierten, verwebten Filamenten (wie etwa die Gewebe 50-1 und 50-2 in Fig. 3).

Es wurde gefunden, das das Flächengewicht der Kohlefaser-Filamente 32 der Verstärkungseinrichtung im Bereich von 100 g/m² - 800 g/m², vorzugsweise im Bereich von 200 g/m² - 600 g/m² g/m² und besonders bevorzugt bei etwa 400 g/m² besonders geeignet ist für eine Verstärkungseinrichtung. Die Dicke eines Stapels mit eine Flächengewicht von 400 g/m² beträgt etwa 0,4 mm (400 µm).

Da in der Zahnmedizin nur für zahnmedizinische Verwendungen zugelassene Materialien eingesetzt werden dürfen, ist es vorteilhaft, dass Kohlefaser-Gewebe oder -Gelege entsprechende Zulassungen aufweisen, in Deutschland etwa gemäß dem Medizinproduktgesetz (MPG). Der ausgehärtete Kunststoff, von dem die Vielzahl der Lagen der Gelege bzw. Gewebe durchdrungen sind, weist ebenfalls eine Zulassung als zahnmedizinischer Prothesenkunststoff auf, etwa in Deutschland die Zulassung gemäß dem Medizinproduktgesetz (MPG). Der Kunststoff ist ein Kunstharz, vorzugsweise Polymethylmethacrylat, und ist etwa bei den Lieferanten Schütz Dental Group (Schütz-Dental GmbH), Firma Heraeus oder Firma Candulor (Schweiz) bzw. Candulor Dental GmbH (Deutschland) erhältlich.

Mindestens ein Teilbereich der Vielzahl der Lagen 40, 42 ist so ausgebildet, dass er im Wesentlichen formschlüssig mit einem Positivabdruck 20, 20' von mindestens einem Teilbereich eines Ober- oder Unterkiefers eines Menschen ist (siehe Fig. 4 bis 6).

Eine Verstärkungseinrichtung 10, 10' zum Verstärken einer Kieferprothese bzw. Kieferteilprothese kann wie folgt hergestellt werden.

Zur Realisierung des Schritts a1) des Verfahrens nach Anspruch 11 wird zunächst ein Stapel mit einer Vielzahl 40, 42 von übereinandergelegten Gelegen 30-1, 30-2, 30-3, 30-4 und/oder Geweben 50-1, 50-2 aus Kohlefaser-Filamenten 32 übereinandergelegt, wie in den Figuren 1 und 2 für Gelege und in Fig. 3 für Gewebe gezeigt. In dem Stapel werden einzelne Gelege 30-1, 30-2, 30-3, 30-4 (siehe Fig. 1 und 2) bzw. Gewebe 50-1, 50-2 (siehe Fig. 3) -Lagen so orientiert, dass eine quasi-isotrope Verteilung der Richtungen der Filamente 32 in der Gesamtheit der Lagen ausgebildet wird. Bei Verwendung von Gelegen können auch Doppelgelege, die aus zwei Gelegen mit +45° und -45° orientierten Filamenten hergestellt sind, eingesetzt werden. Der Stapel mit der Vielzahl der Gelege bzw. Gewebe wird in Form, etwa in Form eines Zuschnitts 24 (siehe Fig. 24) geschnitten, etwa in der Größe bzw. Flächenausdehnung der herzustellenden Verstärkungseinrichtung, wie mit der gestrichelten Linie 24 in Fig. 4 angedeutet.

Zur Realisierung des Schritts b1) des Verfahrens nach Anspruch 11 der ausgebildete Stapel von Gelegen bzw. Geweben aus Kohlefaser-Filamenten anschließend noch mit einem flüssigen, aushärtbaren Kunststoff getränkt. Dazu kann der Stapel durch ein Flüssigbad des aushärtbaren Kunststoffs hindurch gezogen bzw. eingetaucht werden. Alternativ kann der Stapel bereits auf eine Formunterlage, etwa eine Formpresse, insbesondere auf einen Positivabdruck 20, 20' eines Unter- oder Oberkiefers eines Menschen aufgelegt sein (wie in Fig. 4 angedeutet) und der aushärtbare Kunststoff wird dann auf den Stapel in gleichmäßiger Verteilung über der Fläche aufgetropft, so dass der Stapel sich mit dem flüssigen Kunststoff voll saugt. Dabei kann die Form bzw. der Positivabdruck vor dem Auflegen des Stapels mit dem flüssigen Kunststoff bestrichen werden, um das Tränken des Stapels auf dessen Unterseite (der Form zugewandten Seite) zu fördern. Zur Realisierung des Schritts c1) des Verfahrens nach Anspruch 11 wird der mit dem Kunststoff getränkte Stapel in eine gewünschte Form gepresst, wobei zumindest ein Teilbereich des Stapels in zumindest einem Teilbereich bzw. gegen zumindest einen Teilbereich eines Positivabdrucks 20, 20' eines Unter-oder Oberkiefers eines Menschen gepresst wird.

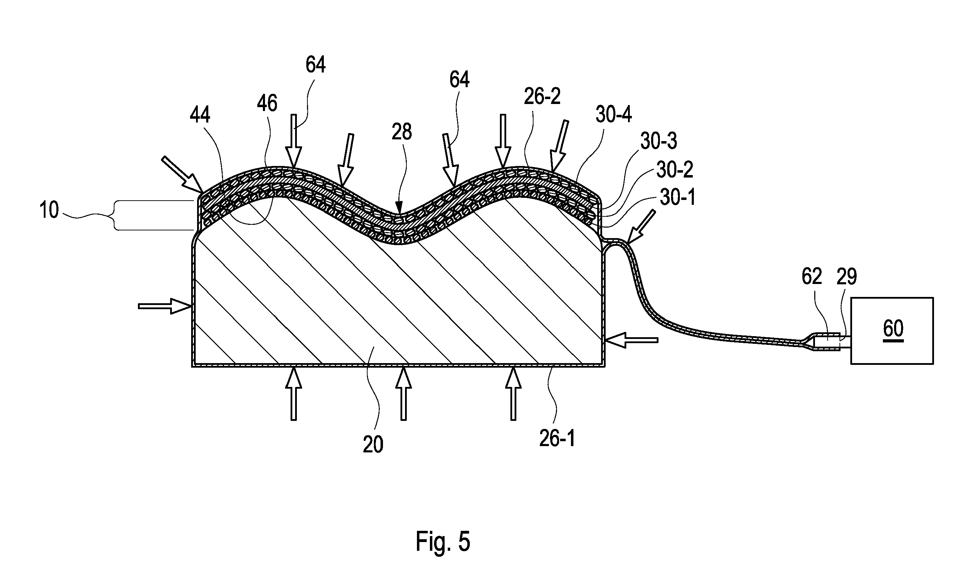

Zum Formpressen kann in einer Ausführungsform der mit dem flüssigen Kunststoff getränkte Stapel auf (zumindest einem Teilbereich) eines Positivabdrucks 20 eines Unter- oder Oberkiefers eines Menschen aufgelegt und tiefgezogen werden. Zum Tiefziehen wird der Positivabdruck 20 mitsamt dem aufgelegten Stapel, der mit dem noch nicht ausgehärteten Kunststoff getränkt ist, in einen vakuumdicht verschließbaren Beutel 28 eingelegt. Anschließend wird der Beutel 28 etwa mittels einer Vakuumpumpe ausgesaugt. Dabei wird eine Einfüllöffnung 29 des Beutels 28 über einen Ansaugstutzen 62 einer Vakuumpumpe 60 gezogen und gasdicht gegen den Stutzen 62 angedrückt bzw. abgedichtet und dann mittels der Vakuumpumpe 60 im Inneren des Beutels ein Vakuum erzeugt. Dabei wirkt der Luftdruck und presst den mit dem flüssigen Kunststoff getränkten Stapel mit Kohlefaser-Filamenten auf die Form des Positivabdrucks 20 (wie in Fig. 5 veranschaulicht).

Vor dem Auflegen des Stapels aus Kohlefaser-Filamenten auf den Positivabdruck 20, 20' wird zunächst eine Trennfolie 26-1 auf den Positivabdruck aufgelegt und der Stapel auf die Trennfolie 26-1 aufgelegt. Die Trennfolie 26-1 bewirkt, dass nach dem Formpressen und Aushärten des Stapels der ausgehärtete Stapel leicht von dem Positivabdruck 20 abgelöst bzw. entfernt werden kann.

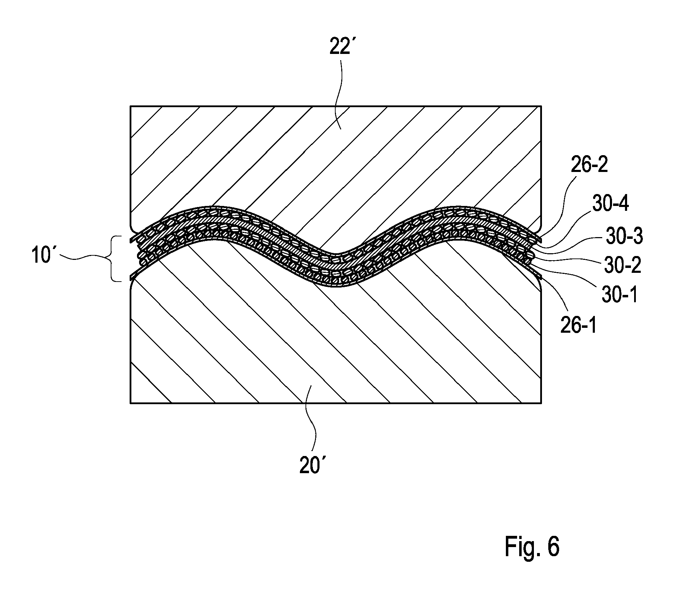

In einer zum Tiefziehen alternativen Ausführungsform des Verfahrens wird zumindest ein Teilbereich des mit dem flüssigen Kunststoff getränkten Stapels auf einen Positivabdruck 20' eines Unter- oder Oberkiefers des Menschen aufgelegt und darüber eine Gegenform 22 zu dem Positivabdruck 20' aufgelegt (wie in Fig. 6 veranschaulicht). Dabei wird vor dem Auflegen des Stapels der Kohlefaser-Filamente auf den Positivabdruck 20' eine erste Trennfolie 26-1 auf den Positivabdruck 20' und der Stapel dann auf die erste Trennfolie 26-1 aufgelegt. Sodann wird darüber eine zweite Trennfolie 26-2 aufgelegt und auf die zweite Trennfolie 26-2 dann die Gegenform 22 zu dem Positivabdruck 20'.

Auch in dieser Ausführungsform des Verfahrens kann als Variante auf den Positivabdruck 20' bzw. auf die darauf aufgelegte erste Trennfolie 26-1 ein Film des flüssigen Kunststoffs aufgestrichen werden, anschließend der Stapel der Kohlefaser-Filamente darauf aufgelegt, anschließend flüssiger Kunststoff in gleichmäßiger Verteilung über der Fläche auf den Stapel aufgeträufelt werden, so dass der Stapel sich gleichmäßig mit dem flüssigen Kunststoff vollsaugt.

Zum Formpressen wird über den Positivabdruck 20' und die Gegenform 22 auf den dazwischen eingelegten Stapel ein vorbestimmter Druck beaufschlagt.

Zur Realisierung des Schritts d1) des Verfahrens nach Anspruch 11 wird nach dem Formpressen des mit dem flüssigen Kunststoff getränkten Stapels der Stapel unter Beibehaltung der erhaltenen Form des Stapels ausgehärtet. Nach dem Aushärten wird der mit dem ausgehärteten Kunststoff getränkte Stapel aus den Teilen 20, 20', 22 der Formpresse herausgelöst und als Verstärkungseinrichtung 10, 10' bereitgestellt.

Gemäß einer weiteren Ausführungsform des Herstellungsverfahrens kann zum Formpressen der formzupressende, mit dem flüssigen Kunststoff getränkte Stapel zusammen mit dem Positivabdruck 20 oder auch zusätzlich zusammen mit der Gegenform 22 in einem flüssigkeitsdichten Beutel angeordnet werden. Der Beutel mitsamt Inhalt kann in einem Flüssigkeitsbad gebracht und auf das Flüssigkeitsbad ein vorbestimmter Druck beaufschlagt werden.

Nach dem Aushärten des Kunststoffs wird auf der Oberfläche der hertgestellten Verstärkungseinrichtung noch eine Mikroverzahnung ausgebildet, etwa mittels des Rocatec® Verfahren ausgebildet werden. Die Mikroverzahnung bewirkt eine bessere bzw. besser haftende Verbindung der Verstärkungseinrichtung mit dem Kunststoff, indem die Verstärkungseinrichtung bei der Herstellung der Kieferprothesenvorichtung eingebettet wird.

Der Positivabdruck 20, 20' wird aus Gips hergestellt. Dabei wird der zu einem Teig angerührte Gips in eine Negativform des Unter- oder Oberkiefers des Patienten eingefüllt und der Gips dann ausgehärtet. Die Negativform des Unter- bzw. Oberkiefers wird durch Formen und zumindest teilweises Trocknen direkt am Unter- bzw. Oberkiefers des Patienten, in der Regel in einer Zahnarztpraxis, hergestellt.

Zum Herstellen der Kieferprothesenvorrichtung werden ein Positivabdruck des Unterkiefers bzw. Oberkiefers des Patienten und eine entsprechende Gegenform zu dem Positivabdruck zusammen als Gießform präpariert. Sodann wird auf den Positivabdruck und auf die Gegenform eine Trennhilfe, etwa in Form einer Trennfolie oder einer Trennschicht, aufgebracht. Dann wird aushärtbarer Kunststoff auf bzw. in die so vorbereitete Gießform aufgebracht und die vorgefertigte Verstärkungseinrichtung vollständig in den Kunststoff eingetaucht. Dann wird die Gießform geschlossen, ein vorbestimmter Druck wird beaufschlagt und der aushärtbare Kunststoff wird ausgehärtet. Danach wird die Gießform geöffnet und die darin ausgebildete, ausgehärtete Kieferprothese bzw. Kieferteilprothese ausgelöst und bereitgestellt.

In einer Ausführungsform des Verfahrens zum Herstellen der Kieferprothesenvorrichtung wird ein selbstaushärtendes Kunststoffsystem, etwa ein 2-Komponenten-System, in die Gießform eingefüllt und beim Aushärten wird auf die geschlossene Gießform mit dem darin eingefüllten Kunststoff und der in dem Kunststoff eingetauchten Verstärkungseinrichtung während einer vorbestimmten Selbstaushärtezeit ein vorbestimmter Druck, ein sogenannter Selbstaushärtedruck, gemäß Herstellerangaben beaufschlagt. Zur gleichmäßigen Druckausübung wird die Gießform in ein Flüssigkeitsbad eingebracht und auf das Flüssigkeitsbad der vorbestimmte Druck beaufschlagt. Dies ist das sogenannte Gieß-Press-Verfahren.

Für das Gieß-Press-Verfahren kann ein selbsthärtender Kunststoff bezogen werden,etwa bei dem Lieferanten Firma Schütz Dental Group (in Deutschland: Schütz-Dental GmbH) unter dem Namen FuturaJet. Dieses Material wird in zwei Komponenten geliefert, zum einen das FuturaJet Pulver, das als wesentlichen Bestandteil Polymethylmethacrylat und zusätzlich Derivate der Barbitursäure, Trübungsmittel, Eisenoxid- und Perylen-Pigmente enthält, und zum anderen die FuturaJet Flüssigkeit, die als wesentlichen Bestandteil Methylmethacrylat und zusätzlich Vernetzer sowie in Spuren quaternäres Ammoniumsalz, Kupfer-I-Ionen, Lichtschutzmittel und Stabilisatoren enthält. Das Pulver und die Flüssigkeit werden unmittelbar vor der Verwendung, das heißt vor dem Gießen und Pressen, miteinander vermischt, die erhaltene teigartige Mischung wird anschließend in die Gießform gebracht, formgepresst und ausgehärtet.

In einer anderen Ausführungsform des Verfahrens zum Herstellen der Kieferprothesenvorrichtung wird ein thermisch aushärtbarer Kunststoff verwendet und in die Gießform eingefüllt. Zum Aushärten werden auf die Gießform mit dem darin eingefüllten Kunststoff und der in dem Kunststoff eingetauchten Verstärkungseinrichtung in einem Flüssigkeitsbad (Wasserbad) ein vorbestimmter Aushärtedruck (Heißaushärtedruck) und eine vorbestimmte Heißaushärtetemperatur zumindest während einer vorbestimmten Heißaushärtezeitdauer beaufschlagt (alle Parameter gemäß Herstellerangaben). Das Flüssigkeitsbad mit der eingetauchten gefüllten Gießform befindet sich dabei in einem sogenannten Autoklaven. Dies ist das sogenannte Heißverfahren.

Für das Heißluftverfahren kann ein thermisch aushärtbarer Kunststoff bezogen werden, etwa von dem Lieferanten der Firma Candulor in Pulverform unter dem Namen Aesthetic Basismaterial Polymer. Das Pulver besteht im Wesentlichen aus Polymethylmethacrylat, in das Weichmacher, Farbstoffpigmente und Katalysatoren für die Aushärtereaktion eingemischt sind. Die Farbe der eingemischten Pigmente kann weiß oder rosa bzw. fleischfarben entsprechend der Farbe von Zahnfleisch gewählt sein.

Am Ende des Verfahrens zum Herstellen einer Kieferprothesenvorrichtung weist das Prothesenbasisteil eine Gesamtdicke von ca. 4 mm bis 5 mm auf, wobei auf beiden Seiten der eingebetteten Verstärkungsvorrichtung 2 mm bis 2,5 mm dicke Schichten aus Kunststoff ausgebildet sind, jedenfalls in Bereichen wie keine Ersatzzähne auf der Oberseite des Prothesenbasisteils vorgesehen ist.

Bezugszeichenliste:
- 10, 10': Verstärkungseinrichtung
- 20, 20': Positivabdruck
- 21: Kieferabdruckpositivform
- 22: Gegenform
- 24: mit Kohlefaser-Filamenten ausgelegter Bereich bzw. Zuschnitt
- 26-1: erste Trennfolie
- 26-2: zweite Trennfolie
- 28: Beutel
- 29: Einfüllöffnung
- 30-1: erstes Gelege
- 30-2: zweites Gelege
- 30-3: drittes Gelege
- 30-4: viertes Gelege
- 32: Filament
- 40: Vielzahl von Lagen (Gelegen)
- 42: Vielzahl von Lagen (Geweben)
- 44: Unterseite
- 46: Oberseite
- 50-1: erstes Gewebe
- 50-2: zweites Gewebe
- 60: Vakuumpumpe
- 62: Ansaugstutzen
- 64: Luftdruck

## Patentansprüche

1. Verstärkungseinrichtung (10, 10') zum Verstärken einer Kieferprothese bzw. Kieferteilprothese zur Verwendung in der Mundhöhle (Ober- und/oder Unterkiefer) eines menschlichen Patienten, **gekennzeichnet durch:**
eine Vielzahl von Lagen (40, 42) mit jeweils mindestens einem Gelege (30-1, 30-2, 30-3, 30-4) von Kohlefaser-Filamenten (32) bzw. mindestens einem Gewebe (50-1, 50-2) von Kohlefaser-Filamenten (32),
wobei die Lagen (40, 42) von einem ausgehärteten Kunststoff durchdrungen sind, und
wobei mindestens ein Teilbereich der Vielzahl von Lagen (40, 42) so ausgebildet ist, dass er im Wesentlichen formschlüssig mit einem Positivabdruck (20, 20') von mindestens einem Teilbereich eines Ober- oder Unterkiefers des Patienten ist.

2. Verstärkungseinrichtung nach Anspruch 1, **dadurch gekennzeichnet, dass** in der Vielzahl der Lagen (40, 42) von Kohlefaser-Filamenten (32) eine quasi-isotrope Verteilung der Richtungen der Filamente (32) in den Lagen (40, 42) ausgebildet ist.

3. Verstärkungseinrichtung nach Anspruch 1 oder 2, **dadurch gekennzeichnet, dass** die Vielzahl von Lagen (40) mindestens vier Filament-Gelege (30-1, 30-2, 30-3, 30-4) umfasst, die bezüglich der Richtungen der Filamente (32) in den Gelegen (30-1, 30-2, 30-3, 30-4) gemäß einer der folgenden Stapelfolgen übereinander gelegt sind:
(0°, -45°, 45°, 90°), (0°, 45°, -45°, 90°), (-45°, 0°, 90°, 45°), (45°, 0°, 90°, -45°), (0°, 45°, 90°, -45°) oder (0°, 90°, -45°, 45°).

4. Verstärkungseinrichtung nach Anspruch 1 oder 2, **dadurch gekennzeichnet, dass** die Vielzahl von Lagen (42) mindestens zwei übereinander gelegte Filament-Gewebe (50-1, 50-2) umfasst, wobei in dem ersten Gewebe (50-1) die Richtungen der Filamente (32) 0° und 90° und in dem zweiten Gewebe (50-2) die Richtungen der Filamente (32) -45° und +45° betragen.

5. Verstärkungseinrichtung nach einem der Ansprüche 1 bis 4, **dadurch gekennzeichnet, dass** der Kunststoff ein ausgehärtetes Kunstharz, wie etwa Polymethylmethacrylat, umfasst.

6. Kieferprothesenvorrichtung, vorgesehen als zahnmedizinische Kieferprothese bzw. Kieferteilprothese zur Verwendung in der Mundhöhle (Ober- und/oder Unterkiefer) eines menschlichen Patienten, mit:
einem Prothesenbasisteil mit einer Unterseite und einer Oberseite, wobei zumindest ein Teilbereich der Unterseite im Wesentlichen formschlüssig mit zumindest einem Teilbereich eines Positivabdrucks (20) eines Ober- oder Unterkiefers des Patienten und/oder zumindest einem Teilbereich eines Ober-oder Unterkiefers des Patienten ist,
**gekennzeichnet durch** eine Verstärkungseinrichtung (10, 10') nach einem der Ansprüche 1 bis 5, die im Wesentlichen vollständig in das Prothesenbasisteil eingebettet ist.

7. Kieferprothesenvorrichtung nach Anspruch 6, **dadurch gekennzeichnet, dass** das die Verstärkungseinrichtung (10, 10') umgebende Material des Prothesenbasisteil ein Kunststoff ist, der eine Zulassung als zahnmedizinischer Prothesenkunststoff aufweist.

8. Kieferprothesenvorrichtung Anspruche 6 oder 7, **dadurch gekennzeichnet, dass** in der Oberseite des Prothesenbasisteils eine oder mehrere Zahnersatzeinrichtungen verankert sind.

9. Kieferprothesenvorrichtung nach einem der Ansprüche 6 bis 8, **dadurch gekennzeichnet, dass** mindestens ein Teilbereich der Unterseite des Prothesenteils formschlüssig mit mindestens einem Teilbereich eines Ober-oder Unterkiefers des Patienten ist.

10. Kieferprothesenvorrichtung nach einem der Ansprüche 6 bis 9, **dadurch gekennzeichnet, dass** an der Unterseite des Prothesenbasisteils mindestens eine Verankerungseinrichtung vorgesehen ist, die zum Verankern mit einer in einem Unter- oder Oberkiefer des Patienten eingesetzten Implantateinrichtung ausgebildet ist.

11. Verfahren zum Herstellen einer Verstärkungseinrichtung (10, 10') zum Verstärken einer Kieferprothese bzw. Kieferteilprothese zur Verwendung in der Mundhöhle (Ober- und/oder Unterkiefer) eines menschlichen Patienten, **gekennzeichnet durch** folgende Schritte:
a1) Ausbilden eines Stapels mit einer Vielzahl von Lagen (40, 42) mit jeweils mindestens einem Gelege (30-1, 30-2, 30-3, 30-4) von Kohlefaser-Filamenten (32) bzw. mindestens einem Gewebe (50-1, 50-2) von Kohlefaser-Filamenten (32),
b1) Tränken des im Schritt a1) ausgebildeten Stapels mit einem flüssigen, aushärtbaren Kunststoff,
c1) Formpressen von zumindest einem Teilbereich des im Schritt b1) erhaltenen, getränkten Stapels in bzw. gegen zumindest einen Teilbereich eines Positivabdrucks (20, 20') eines Unter- oder Oberkiefers eines Patienten, und
d1) Aushärten des Kunststoffs unter Beibehaltung der **durch** das Formpressen aus Schritt c1) erhaltenen Form und Bereitstellen des mit dem ausgehärteten Kunststoff getränkten Stapels als die Verstärkungseinrichtung (10, 10').

12. Verfahren nach Anspruch 11, **dadurch gekennzeichnet, dass** beim Übereinanderlegen der Vielzahl der Gelege (30-1, 30-2, 30-3, 30-4) bzw. Gewebe (50-1, 50-2) eine quasi-isotrope Verteilung der Richtungen der Filamente (32) in den einzelnen Gelegen (30-1, 30-2, 30-3, 30-4) bzw. Geweben (50-1, 50-2) ausgebildet wird

13. Verfahren nach Anspruch 11 oder 12, **dadurch gekennzeichnet, dass** im Schritt c1) zumindest ein Teilbereich des im Schritt b1) erhaltenen, getränkten Stapels auf zumindest einen Teilbereich eines Positivabdrucks (20) eines Unter- oder Oberkiefers des Patienten aufgelegt und tiefgezogen wird.

14. Verfahren nach Anspruch 13, **dadurch gekennzeichnet, dass** zum Tiefziehen der Positivabdruck (20, 20') mitsamt dem aufeinander gelegten Stapel getränkt mit dem noch nicht ausgehärteten Kunststoff in einen vakuumdicht verschließbaren Beutel (28) eingelegt und im Inneren des Beutels (28) ein Vakuum erzeugt wird, wobei vorzugsweise eine Einfüllöffnung (29) des Beutels (28) an eine Vakuumpumpe (60) angeschlossen und mittels der Vakuumpumpe (60) das Vakuum im Inneren des Beutels (28) erzeugt wird.

15. Verfahren nach einem der Ansprüche 11 bis 14, **dadurch gekennzeichnet, dass** vor dem Ausführen des Schritts c1) eine Trennfolie (26-1) auf den Positivabdruck (20, 20') so aufgelegt wird, dass die Trennfolie (26-1) zumindest einen Teilbereich (24) des Positivabdrucks (20, 20') überdeckt, auf den im Schritt c1) der getränkte Stapel aufgelegt werden soll.

16. Verfahren nach einem der Ansprüche 11 oder 12, **dadurch gekennzeichnet, dass** im Schritt c1) zumindest ein Teilbereich des im Schritt b1) erhaltenen, getränkten Stapels zwischen zumindest einen Teilbereich eines Positivabdrucks (20') eines Unter- oder Oberkiefers des Patienten und einen entsprechenden Teilbereich einer Gegenform (22) zu dem Positivabdruck (20') eingelegt wird, und dass über den Positivabdruck (20') und/oder die Gegenform (22) auf den eingelegten Stapel ein vorbestimmter Druck beaufschlagt wird.

17. Verfahren nach Anspruch 16, **dadurch gekennzeichnet, dass** vor dem Ausführen des Schritts c1) eine erste Trennfolie (26-1) auf den Positivabdruck (20') und eine zweite Trennfolie (26-2) auf die Gegenform (22) zu dem Positivabdruck (20') so aufgelegt werden, dass die erste (26-1) bzw. zweite (26-2) Trennfolie zumindest einen jeweiligen Teilbereich (24) des Positivabdrucks (20') bzw. der Gegenform überdeckt, welche Teilbereiche im Schritt c1) in Kontakt mit den getränkten Stapel kommen.

18. Verfahren nach einem der Ansprüche 11 bis 17, **dadurch gekennzeichnet, dass** beim Ausführen des Schritts c1) der formzupressende, getränkte Stapel zusammen mit dem Positivabdruck (20, 20') und nach den Ansprüchen 16 und 17 auch zusammen mit der Gegenform (22) in einem Flüssigkeitsbad angeordnet werden und auf das Flüssigkeitsbad ein vorbestimmter Druck beaufschlagt wird.

19. Verfahren nach einem der Ansprüche 11 bis 18, **dadurch gekennzeichnet, dass** nach dem Ausführen des Schritts d1) eine Mikroverzahnung auf zumindest einem Teilbereich der Oberfläche des ausgehärteten Stapels ausgebildet wird.

20. Verfahren zum Herstellen einer Kieferprothesenvorrichtung, vorgesehen als Kieferprothese bzw. Kieferteilprothese zur Verwendung in der Mundhöhle (Ober- und/oder Unterkiefer) eines menschlichen Patienten, mit dem folgenden Schritt:
a2) Einfüllen von aushärtbarem Kunststoff in eine zum Herstellen der Kieferprothesenvorrichtung vorgefertigte Gießform,
**gekennzeichnet durch:**
Einbringen einer Verstärkungseinrichtung (10, 10') nach einem der Ansprüche 1 bis 6 in die Gießform und vollständiges Eintauchen in den Kunststoff.

21. Verfahren nach Anspruch 20, ferner **gekennzeichnet durch** Aushärten des Kunststoffs in der Gießform, um **dadurch** die Kieferprothesenvorrichtung auszubilden und Auslösen der ausgebildeten Kieferprothesenvorrichtung aus der Gießform.

22. Verfahren nach Anspruch 20 oder 21, **dadurch gekennzeichnet, dass** im Schritt a2) ein thermisch aushärtbarer Kunststoff in die Gießform eingefüllt wird und dass beim Aushärten auf die Gießform mit dem eingefüllten Kunststoff und der in dem Kunststoff eingetauchten Verstärkungseinrichtung in einem Flüssigkeitsbad ein vorbestimmter Heißaushärtedruck und eine vorbestimmte Heißaushärtetemperatur zumindest während einer vorbestimmten Heißaushärtezeitdauer beaufschlagt werden.

23. Verfahren nach Anspruch 21 oder 22, **dadurch gekennzeichnet, dass** im Schritt a2) ein selbstaushärtendes Kunststoffsystem in die Gießform eingefüllt wird und dass beim Aushärten auf die Gießform mit dem eingefüllten Kunststoffsystem und der in dem Kunststoffsystem eingetauchten Verstärkungseinrichtung, vorzugsweise in einem Flüssigkeitsbad, während einer bestimmten Selbstaushärtezeit ein vorbestimmter Selbstaushärtedruck beaufschlagt wird.
